# EUROPEAN PATENT APPLICATION

(11) **EP 2 378 770 A1**
(43) Date of publication of application: **19.10.2011**
(21) Application number: 09836010.0
(22) Date of filing: 07.12.2009
(51) Int. Cl.: H04N 7/173

(54) **METHOD FOR RECEIVING AND TRANSMITTING MEDIUM AND USER EQUIPMENT AND SERVICE GUIDE SERVER**

(30) Priority: 31.12.2008 CN 200810247425
(71) Applicant: Huawei Device Co., Ltd., Longgang District Shenzhen Guangdong 518129 (CN)
(72) Inventor: CHEN, Guoqiao, Shenzhen Guangdong 518129 (CN); ZHANG, Huiping, Shenzhen Guangdong 518129 (CN); YANG, Jian, Shenzhen Guangdong 518129 (CN); ZHANG, Chuxiong, Shenzhen Guangdong 518129 (CN)
(74) Representative: Charles, Glyndwr
(86) International application number: PCT/CN2009/075356
(87) International publication number: WO 2010/075723

(57) **Abstract**

A method for receiving and sending media, a user equipment (UE), and a service guide (SG) server are disclosed in the present invention. The method includes: receiving an SG that includes first access information, access association information, and second access information; receiving media corresponding to the first access information, where the media corresponding to the first access information supports a service or content; and when switching is performed, determining the second access information according to the access association information, and accessing media corresponding to the second access information, where the media corresponding to the second access information also supports the service or content. With the embodiments of the present invention, the smooth transition of the service or content can be ensured when bearer resources are switched, thus the user experience is enhanced.

## Description

This application claims priority to Chinese Patent Application No. CN 200810247425.7, filed with the Chinese Patent Office on December 31, 2008 and entitled "METHOD FOR RECEIVING AND SENDING MEDIA, USER EQUIPMENT, AND SERVICE GUIDE SERVER", which is incorporated herein by reference in its entirety.

### FIELD OF THE INVENTION

The present invention relates to mobile communication technologies, and in particular, to a method for receiving and sending media, a user equipment (UE), and a service guide (SG) server.

### BACKGROUND OF THE INVENTION

Multiple bearer networks are available for mobile television (TV): 1. ground-based broadcast mode, including European digital video broadcasting-handheld (DVB-H) technology, South Korean terrestrial-digital multimedia broadcasting (T-DMB) technology, and American media forward link only (MediaFLO) technology; 2. satellite-based broadcast mode, including European satellite digital multimedia broadcasting (SDMB) technology; 3. multimedia broadcast/multicast service (MBMS) technology, broadcast multicast service (BCMCS) technology, and streaming technology that are in the mobile network-based 3rd Generation Partnership Project (3GPP). Because multiple bearer networks are available for mobile TV, when signals on one network become weaker, the network needs to be switched to another network; or the network needs to be switched due to the change of business strategies of operators, for example, a broadcasting network is switched to a mobile network.

During the implementation of the present invention, the inventor discovers at least the following problems in the prior art: after the network is switched, the service or content being played on a mobile terminal may be disconnected. Consequently, the smooth transition of the service or content cannot be realized, and thus the user experience is affected.

### SUMMARY OF THE INVENTION

Embodiments of the present invention provide a method for receiving and sending media, a UE, and an SG server to solve the problem in the prior art that a mobile terminal cannot realize smooth transition of a service or content after the network is switched.

An embodiment of the present invention provides a method for receiving media, including:
receiving an SG that includes first access information, access association information, and second access information;
receiving media corresponding to the first access information, where the media corresponding to the first access information supports a service or content; and
when switching is performed, determining the second access information according to the access association information, and accessing media corresponding to the second access information, where the media corresponding to the second access information supports the service or content.

An embodiment of the present invention provides a method for sending media, including:
sending an SG to a UE, where the SG includes first access information, access association information, and second access information;
sending media corresponding to the first access information, where the media corresponding to the first access information supports a service or content; and
when the UE performs switching, sending media corresponding to the second access information to the UE, where the media corresponding to the second access information supports the service or content.

An embodiment of the present invention provides a UE, including:
a receiving module, configured to receive an SG that includes first access information, access association information, and second access information;
an obtaining module, configured to receive media corresponding to the first access information, where the media corresponding to the first access information supports a service or content; and
a switching module, configured to: when switching is performed, determine the second access information according to the access association information, and access media corresponding to the second access information, where the media corresponding to the second access information supports the service or content.

An embodiment of the present invention provides an SG server, including:
a first sending module, configured to send an SG to a UE, where the SG includes first access information, access association information, and second access information;
a second sending module, configured to send media corresponding to the first access information, where the media corresponding to the first access information supports a service or content; and
a third sending module, configured to send media corresponding to the second access information to the UE when the UE performs switching, where the media corresponding to the second access information supports the service or content.

According to the preceding technical solution, in the embodiments of the present invention, the second access information associated with the first access information is obtained when switching is needed. Because the access information is associated, the same service or content may be supported under different media. In this way, smooth transition of the service or content can be ensured after the mobile terminal switches the media.

### BRIEF DESCRIPTION OF THE DRAWINGS

FIG. 1 is a schematic flowchart of a method according to a first embodiment of the present invention;
FIG. 2 is a schematic flowchart of a method according to a second embodiment of the present invention;
FIG 3 is a schematic flowchart of a method according to a third embodiment of the present invention;
FIG. 4 is a schematic flowchart of a method according to a fourth embodiment of the present invention;
FIG. 5 is a schematic flowchart of a method according to a fifth embodiment of the present invention;
FIG. 6 is a schematic structural diagram of a UE according to an embodiment of the present invention; and
FIG. 7 is a schematic structural diagram of an SG server according to an embodiment of the present invention.

### DETAILED DESCRIPTION OF THE EMBODIMENTS

The technical solution of the present invention is hereinafter described in detail with reference to the embodiments and accompanying drawings.

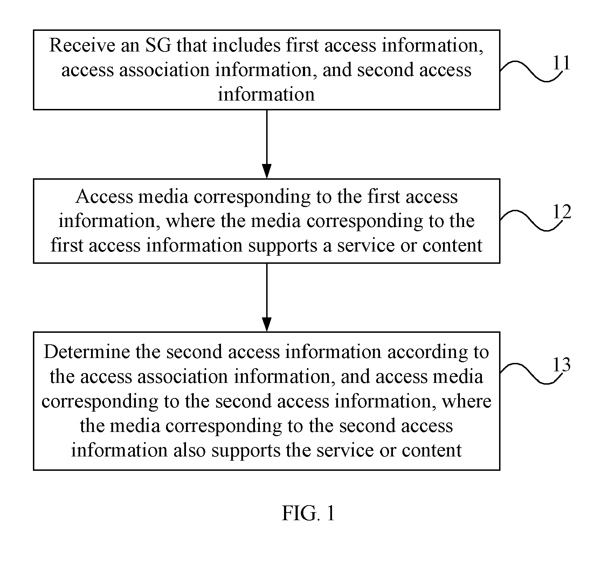

FIG. 1 is a schematic flowchart of a method according to a first embodiment of the present invention. The method includes the following steps:
Step 11: The UE receives an SG that includes first access information, access association information, and second access information. The first access information corresponds to first media that may support a service or content. The access association information indicates the second access information associated with the first access information. The second access information corresponds to second media that also supports the service or content.

The SG includes a service fragment and/or a content fragment and an access fragment. The service fragment is used to describe the service information of a mobile multimedia service, for example, a watched TV channel. The content fragment is used to describe related information of a program, for example, specific content of a watched channel. The access fragment includes access information. The access information indicates that the media needed by the corresponding service or content is received, for example, different bearer networks or different servers on the same network. The UE may receive the service or content carried in the first media according to the first access information of the first access fragment.

Step 12: The UE receives media corresponding to the first access information, where the media corresponding to the first access information supports a service or content.

Step 13: When switching is performed, the UE determines the second access information according to the access association information, and accesses media corresponding to the second access information, where the media corresponding to the second access information also supports the service or content.

For example, the media needs to be switched when the external environment changes (when the signals on the bearer network become weaker or the operator needs to change the strategy). In this case, to ensure the smooth transition of the service or content that is originally carried in the first media, it is necessary to smoothly switch the media to the second media. Because the access information corresponds to the media, the second access information in the second access fragment that is associated with the first access information in the first access fragment needs to be obtained.

In this embodiment, the second access information associated with the first access information is obtained, so that the smooth transition of the service or content is realized after the media is switched, and thus the user experience is enhanced.

The preceding second access information may be determined according to the access association information. The access association information may be carried in the service fragment and/or the content fragment and/or the first access fragment. Details are given in the following embodiments.

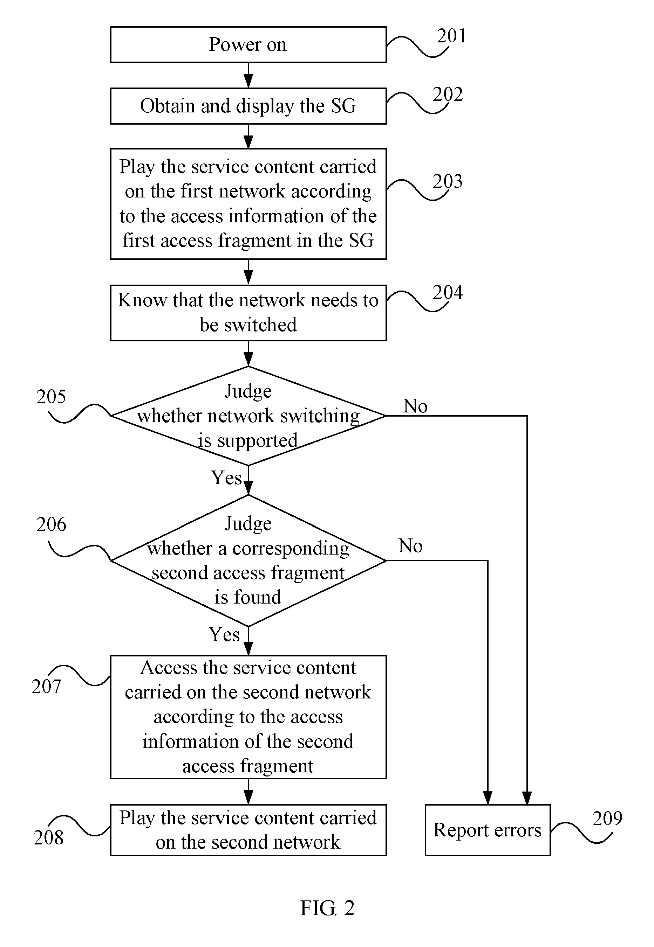

FIG. 2 is a schematic flowchart of a method according to a second embodiment of the present invention. The method includes the following steps:
Step 201: The UE is powered on and initialized.
Step 202: The UE obtains and displays the SG
Step 203: The UE plays the service or content carried in the first media (for example, the network) according to the first access information in the first access fragment that the user selects in the SG
Step 204: The UE knows that it is necessary to switch the network. For example, when the signals on the first network become weaker or when the operator/user specifies a network, the UE determines that it is necessary to switch the network, for example, from a broadcasting network to a video on demand (VoD) network.
Step 205: The UE judges whether network switching is supported; if network switching is supported, the process proceeds to step 206; if network switching is not supported, the process proceeds to step 209. Specifically, the UE may judge whether the network switching is supported according to whether the access association information is received. If the access association information is received, it indicates that the network switching is supported.

The access association information may be Indication information of service switching, such as HybridAccess. The Indication information may be added and carried in the service fragment and/or the content fragment. The specific format of the Indication information may be as shown in Table 1.

**Table 1**

| **Element Name** | **Type** | **Mandatory or Not** | **Number of Occurrences** | **Description** | **Data Type** |
|---|---|---|---|---|---|
| HybridAccess | E1 | NO/TO | 0...1 | Indicates whether the service or content may be sent through the hybrid network or switched through the hybrid network. | |
| AccessInfo | E2 | NO/TO | 0...N | Access information of the hybrid network | |
| AccessIDRef | A | NO/TO | 1 | index of the access fragment | string |
| Priority | A | NO/TO | 1 | Priority | unsignedShort |

Or, the access association information may be Association information of service switching, such as AssociationAccess. The Association information may be added and carried in the access fragment. The specific format of the Association information may be as shown in Table 2.

**Table 2**

| **Element Name** | **Type** | **Mandatory or Not** | **Number of Occurrences** | **Description** | **Data Type** |
|---|---|---|---|---|---|
| AssociationA ccess | E1 | NO/TM | 0...N | Indicates association access information in the service fragment or the content fragment. | |
| AccessIDRef | A | NO/TM | 1 | Index of the access | anyURI |
| Priority | A | NO/TM | 1 | Priority | unsignedShort |

Or, the access association information may be Choice criterion information of service switching, such as AccessChoose. The Choice criterion information may be added and carried in the service fragment and/or the content fragment and/or the access fragment. The specific format of the Choice criterion information may be as shown in Table 3.

**Table 3**

| **Element Name** | **Type** | **Mandatory or Not** | **Number of Occurrences** | **Description** | **Data Type** |
|---|---|---|---|---|---|
| AccessChoose | E1 | NM/TM | 0...1 | Indicates how to select an access mode. | |
| | | | | Selection basis for selecting a hybrid network: | |
| | | | | 0 - Unspecified | |
| | | | | 1 - Priority | |
| type | A | NM/TM | 1 | 2 - Same TargetArea | unsignedByte |
| | | | | 3 - Random selection | |
| | | | | 4 - Sequential selection | |
| | | | | 5 - User-defined | |
| | | | | 6 to 127 - Reserved | |
| | | | | 128 to 255 - Private extension | |
| AccessIDRef | A | NO/TM | 1 | Index of the access fragment | anyURI |
| Priority | A | NO/TM | 1 | Priority | unsignedShort |

Step 206: The UE judges whether the second access fragment corresponding to the access association information is found; if the second access fragment corresponding to the access association information is found, the process proceeds to step 207; if the second access fragment corresponding to the access association information is not found, the process proceeds to step 209. The step of judging whether the second access fragment corresponding to the access association information is found by the UE may be: judging whether the second access fragment indicated by the AccessIDRef of the access fragment can be found.

Step 207: The UE accesses the second media according to the second access information, and accesses the service or content carried in the second media (for example, the second network) according to the second media.

Step 208: The UE plays the service or content carried on the second network.

Step 209: The UE reports errors.

In this embodiment, the access association information is carried in the service fragment and/or the content fragment and/or the access fragment. In this way, the corresponding second access fragment may be determined according to the access association information, and the network is switched according to the second access information in the second access fragment to ensure the smooth transition of the service or content.

In the preceding embodiment, the UE directly searches for the corresponding access fragment after judging that the network switching is supported. To ensure the validity of the SG, the UE may display the SG after judging that the network switching is supported.

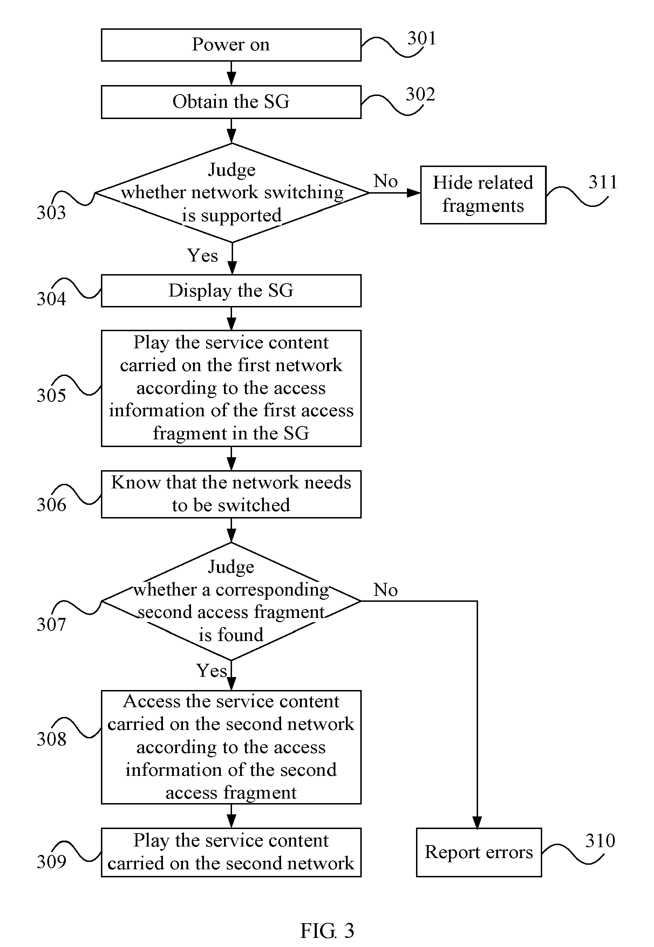

FIG. 3 is a schematic flowchart of a method according to a third embodiment of the present invention. The third embodiment is different from the second embodiment in that: In the second embodiment, the UE obtains and displays the SG at the same time; in the third embodiment, the UE displays the SG only when the network switching is supported. The method provided in the third embodiment includes the following steps:
Step 301: This step is the same as step 201 of the second embodiment, and is not further described.
Step 302: The UE obtains the SG This step is different from step 202 in which the UE obtains and displays the SG
Step 303: The UE judges whether the network switching is supported; if the network switching is supported, the process proceeds to step 304; if the network switching is not supported, the process proceeds to step 311. The judgment criterion of the UE and the method for carrying the access association information are the same as those in step 205 provided in the second embodiment, and are not further described.
Step 304: The UE displays the SG.
Step 305-306: The steps are correspondingly the same as step 203-204 in the second embodiment, and are not further described.
Steps 307-310: The steps are correspondingly the same as steps 206-209 in the second embodiment, and are not further described.
Step 311: The UE hides related fragments of the SG. The related fragments include the service fragment, the content fragment, and the access fragment that correspond to the SG

In this embodiment, the access association information is carried in the service fragment or the content fragment or the access fragment. In this way, the corresponding second access fragment may be determined according to the access association information, and the network is switched according to the access information in the second access fragment to ensure the smooth transition of the service or content. In addition, because the UE displays the SG only when the network switching is supported, the service or content that the user selects based on the SG can still be played. This avoids the problem that the service or content blindly selected cannot be supported after the network is switched, thus the validity of the SG is ensured.

In the second embodiment and the third embodiment, only one piece of access association information is available. When at least two second access fragments are available, one fragment needs to be determined among the multiple second access fragments.

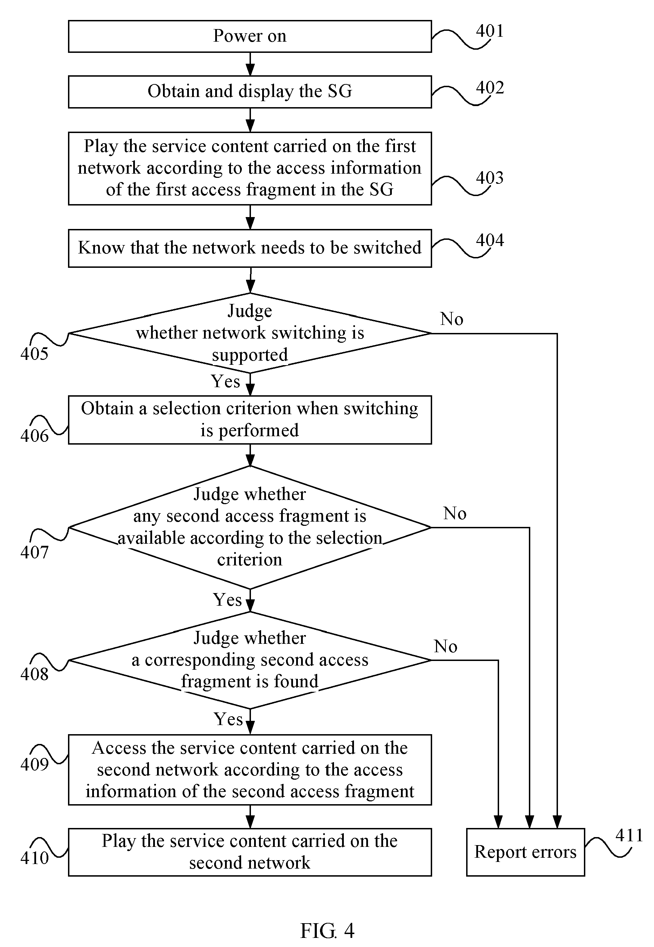

FIG. 4 is a schematic flowchart of a method according to a fourth embodiment of the present invention. The fourth embodiment adds a step of determining a second access fragment on the basis of the second embodiment. The method provided in the fourth embodiment includes the following steps:
Steps 401-404: The steps are correspondingly the same as steps 201-204, and are not further described.
Step 405: The UE judges whether the network switching is supported; if the network switching is supported, the process proceeds to step 406; if the network switching is not supported, the process proceeds to step 411.

In step 205 of the second embodiment, the access association information is a single piece of Indication information, Association information or Choice criterion information. In this embodiment, multiple pieces of access association information are available, that is, at least two pieces of Indication information listed in Table 1 are available, or at least two pieces of Association information listed in Table 2 are available, or at least two pieces of Choice criterion information listed in Table 3 are available. In this case, it is necessary to determine one of at least two second access fragments.

Step 406: The UE obtains the selection basis when network is switched. Specifically, when at least two pieces of Indication information or Association information are available, the selection basis is the priority because each piece of Indication information or Association information includes only the priority. In this case, the UE selects one of at least two second access fragments according to the priority. When two pieces of Choice criterion information are available, the selection basis is determined according to the selection type (that is, the element type). For example, when the element type is 1, the selection basis is the priority, and the UE determines a second access fragment according to the priority. In this case, the UE selects a second access fragment according to the priorities corresponding to each second access fragment specified by the AceessIDRef element. When the element type is 3, the selection basis is random selection, and the UE determines a second access fragment at random.

Step 407: The UE judges whether a second access fragment corresponding to the selection basis is available; if a second access fragment corresponding to the selection basis is available, the process proceeds to step 408; if a second access fragment corresponding to the selection basis is unavailable, the process proceeds to step 411. For example, if the priority is used as the selection basis, the UE judges whether a second access fragment corresponding to the priority is available.

Step 408: The UE judges whether the selected second access fragment is found; if the selected second access fragment is found, the process proceeds to step 409; if the selected second access fragment is not found, the process proceeds to step 411.

Steps 409-411: The steps are correspondingly the same as steps 207-209 of the second embodiment, and are not further described.

In this embodiment, by obtaining the selection basis, the UE may select a correct second access fragment quickly and accurately when multiple second access fragments are available. In this way, the fast transition of a service or content is realized, the processing efficiency of the UE is improved, and the user experience is enhanced.

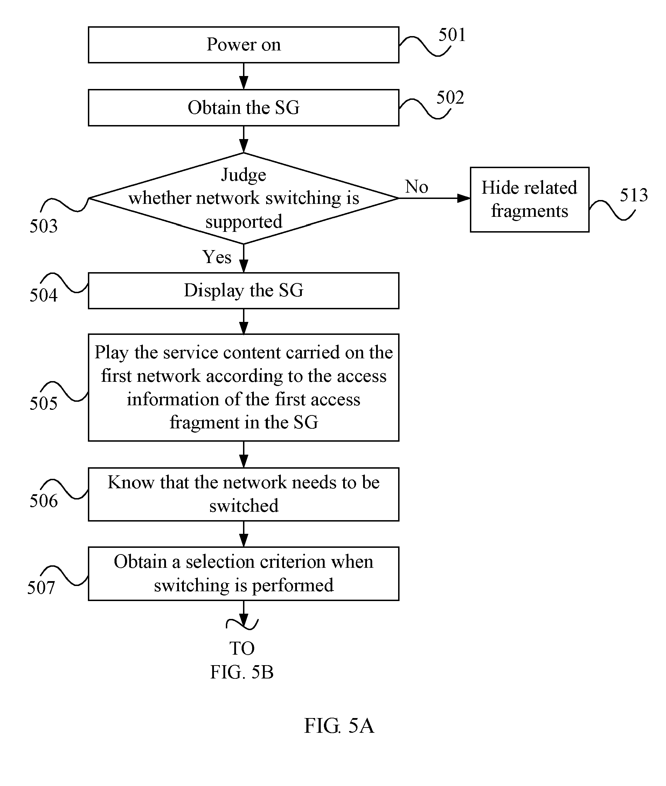

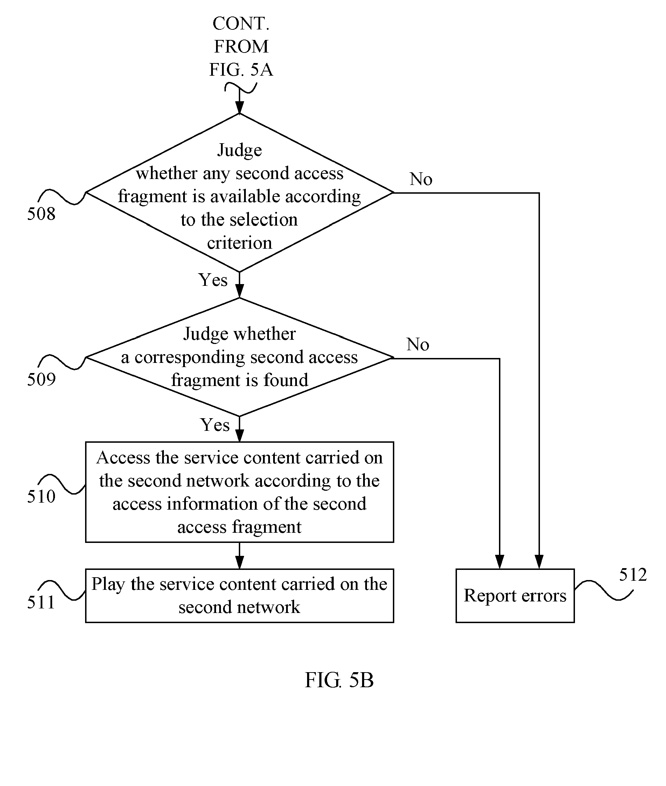

FIG. 5 is a schematic flowchart of a method according to a fifth embodiment of the present invention. The fifth embodiment is different from the fourth embodiment which adds a step of determining a second access fragment on the basis of the second embodiment in that: The fifth embodiment adds a step of determining a second access fragment on the basis of the third embodiment. The method provided in the fifth embodiment includes the following steps:
Step 501-502: The steps are correspondingly the same as step 301-302 in the third embodiment, and are not further described.
Step 503: The UE judges whether the network switching is supported; if the network switching is supported, the process proceeds to step 504; if the network switching is not supported, the process proceeds to step 513. The judgment criterion of the UE and the method for carrying the access association information are the same as those in step 405 provided in the fourth embodiment, and are not further described.
Steps 504-506: The steps are correspondingly the same as steps 304-306 in the third embodiment, and are not further described.
Steps 507-512: The steps are correspondingly the same as steps 406-411 in the fourth embodiment, and are not further described.
Step 513: This step is the same as step 311 in the third embodiment, and is not further described.

In this embodiment, by obtaining the selection basis, the UE may select a correct second access fragment quickly and accurately when multiple second access fragments are available. In this way, the fast transition of a service or content is realized, the processing efficiency of the UE is improved, and the user experience is enhanced. Meanwhile, because the UE displays the SG only when it determines that the network switching is supported, the service or content that the user selects based on the SG can still be played. This avoids the problem that the service or content blindly selected cannot be supported after the network is switched, thus the validity of the SG is ensured.

The preceding embodiments describe a process of receiving media by the UE. Accordingly, the process of sending media by the SG server includes the following steps:
Step A: The SG server sends an SG to the UE, where the SG includes the first access information, access association information, and second access information.
Step B: The SG server sends media corresponding to the first access information, where the media corresponding to the first access information supports a service or content.
Step C: When the UE performs switching, the SG server determines second access information according to the access association information, and according to the second access information, sends media to the UE, where the media also supports the service or content and corresponds to the second access information; or when the UE performs switching, according to the second access information sent from the UE, the SG server sends media to the UE, where the media also supports the service or content and corresponds to the second access information.

The first access information is carried in the access fragment of the SG. When the access association information is the Indication information of service switching listed in Table 1, that is, the HybridAccess, the Indication information is carried in the service fragment and/or the content fragment of the SG; when the access association information is the Association information of service switching listed in Table 2, that is, the AssociationAccess, the Association information is also carried in the access fragment of the SG; when the access association information is the Choice criterion information of service switching listed in Table 3, that is, the AccessChoose, the Choice criterion information may also be carried in the service fragment and/or the content fragment and/or the access fragment.

The SG server sends the access association information to the UE, so that the UE can realize the smooth transition of the service or content after switching the media, thus the user experience is enhanced.

Those of ordinary skill in the art may understand that all or part of the steps of the method according to the preceding embodiments of the present invention may be implemented by a program instructing relevant hardware. The program may be stored in a computer readable storage medium. When the program runs, the steps of the method according to the preceding embodiments of the present invention are performed. The storage medium may be any medium that can store program codes, such as a read only memory (ROM), a random access memory (RAM), a magnetic disk, or a compact disk-read only memory (CD-ROM).

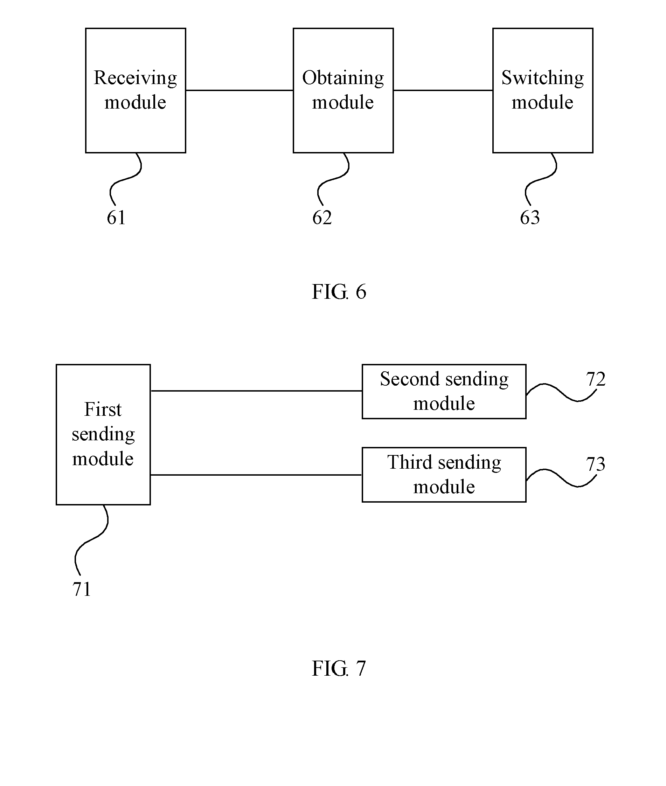

FIG. 6 is a schematic structural diagram of a UE according to an embodiment of the present invention. The UE includes a receiving module 61, an obtaining module 62, and a switching module 63. The receiving module 61 is configured to receive an SG that includes first access information, access association information, and second access information. The obtaining module 62 is configured to receive media corresponding to the first access information received by the receiving module 61, where the media corresponding to the first access information supports a service or content. The switching module 63 is configured to: when switching is performed, determine the second access information according to the access association information received by the receiving module 61, and access the media corresponding to the second access information, where the media corresponding to the second access information also supports the service or content.

The access association information may be Indication information of service switching. The receiving module 61 is configured to receive an SG that includes a service fragment and/or a content fragment and an access fragment, where the service fragment and/or the content fragment includes the Indication information of service switching and the access fragment includes the first access information. Or, the access association information may be Association information of service switching. The receiving module 61 is configured to receive an SG that includes an access fragment, where the access fragment includes the first access information and the Association information of service switching. Or, the access association information may be Choice criterion information of service switching. The receiving module 61 is configured to receive an SG that includes a service fragment and/or a content fragment and an access fragment, where the access fragment includes the first access information and the service fragment and/or the content fragment and/or the access fragment includes the Choice criterion information of service switching.

When at least two pieces of Indication information of service switching or at least two pieces of Association information of service switching are available, each piece of Indication information of service switching or Association information of service switching includes a priority. The obtaining module 62 is configured to: select a piece of access association information from at least two pieces of access association information according to the priority, and obtain second access information corresponding to the selected access association information. When at least two pieces of Choice criterion information of service switching are available, each piece of Choice criterion information of service switching includes a selection type. The obtaining module 62 is configured to: obtain a selection basis according to the selection type; select a piece of access association information from at least two pieces of access association information according to the selection basis; and obtain second access information corresponding to the selected access association information.

In this embodiment, the access association information is obtained, so that the smooth transition of the service or content may be realized after the network is switched, and thus the user experience is enhanced.

FIG. 7 is a schematic structural diagram of an SG server according to an embodiment of the present invention. The SG server includes a first sending module 71, a second sending module 72, and a third sending module 73. The first sending module 71 is configured to send an SG to the UE, where the SG includes first access information, access association information, and second access information. The second sending module 72 is configured to send media corresponding to the first access information according to the first access information sent from the first sending module 71, where the media corresponding to the first access information supports a service or content. The third sending module 73 is configured to: when the UE performs switching, determine second access information according to the access association information obtained by the first sending module 71, and send media corresponding to the second access information to the UE according to the second access information, where the media corresponding to the second access information also supports the service or content; or the third sending module 73 is configured to: when the UE performs switching, send media corresponding to the second access information to the UE according to the second access information sent from the UE, where the media corresponding to the second access information also supports the service or content.

The access association information obtained by the first sending module 71 may be the Indication information of service switching listed in Table 1. The first sending module 71 is configured to: carry the first access information in the access fragment of the SG, and carry the Indication information of service switching in the service fragment and/or the content fragment of the SG Or, the access association information obtained by the first sending module 71 may be the Association information of service switching listed in Table 2. The first sending module 71 is configured to carry the first access information and the Association information of service switching in the access fragment of the SG. Or, the access association information obtained by the first sending module 71 may be the Choice criterion information of service switching listed in Table 3. The first sending module 71 is configured to: carry the first access information in the access fragment of the SG, and carry the Choice criterion information of service switching in the service fragment and/or the content fragment and/or the access fragment of the SG.

In this embodiment, the access association information is sent, so that the UE can realize the smooth transition of the service or content after switching the network, thus the user experience is enhanced.

Finally, it should be noted that although the technical solution of the present invention has been described through some exemplary embodiments, the invention is not limited to such embodiments. It is apparent that those of ordinary skill in the art can make various modifications, variations, and replacements to the invention without departing from the spirit and scope of the invention. The invention is intended to cover the modifications, variations, and replacements provided that they fall within the protection scope defined by the following claims or their equivalents.

## Claims

1. A method for receiving media, comprising:
receiving a service guide (SG) that comprises first access information, access association information, and second access information;
receiving media corresponding to the first access information, wherein the media corresponding to the first access information supports a service or content; and
when switching is performed, determining second access information according to the access association information, and accessing media corresponding to the second access information, wherein the media corresponding to the second access information supports the service or content.

2. The method of claim 1, wherein:
the access association information is Indication information of service switching; and
the SG comprises an access fragment, wherein the access fragment comprises the first access information, and the SG further comprises a service fragment and/or a content fragment, wherein the service fragment and/or the content fragment comprises the Indication information of service switching.

3. The method of claim 1, wherein:
the access association information is Association information of service switching; and
the SG comprises an access fragment, wherein the access fragment comprises the first access information and the Association information of service switching.

4. The method of claim 1, wherein:
the access association information is Choice criterion information of service switching; and
the SG comprises an access fragment, wherein the access fragment comprises the first access information and the Choice criterion information of service switching; or the SG comprises an access fragment, wherein the access fragment comprises the first access information, and the SG further comprises a service fragment and/or a content fragment, wherein the service fragment and/or the content fragment comprises the Choice criterion information of service switching.

5. The method of claim 2 or 3, wherein:
at least two pieces of the access association information are available and each piece of the access association information comprises a priority; and
the determining second access information according to the access association information comprises: selecting one piece of the access association information from the at least two pieces of the access association information according to the priorities; and obtaining the second access information corresponding to the selected access association information.

6. The method of claim 4, wherein:
at least two pieces of the access association information are available and each piece of the access association information comprises a selection type; and
the determining second access information according to the access association information comprises: obtaining a selection basis according to the selection type, selecting one piece of the access association information from the at least two pieces of the access association information according to the selection basis; and obtaining the second access information corresponding to the selected access association information.

7. A method for sending media, comprising:
sending a service guide (SG) to a user equipment (UE), wherein the SG comprises first access information, access association information, and second access information;
sending media corresponding to the first access information, wherein the media corresponding to the first access information supports a service or content; and
when the UE performs switching, sending media corresponding to the second access information to the UE, wherein the media corresponding to the second access information supports the service or content.

8. The method of claim 7, wherein:
the access association information is Indication information of service switching; and
the sending the SG to the UE comprises: carrying the first access information in an access fragment of the SG, carrying the Indication information of the service switching in a service fragment and/or a content fragment of the SG, and sending the SG to the UE.

9. The method of claim 7, wherein:
the access association information is Association information of service switching; and
the sending the SG to the UE comprises: carrying the first access information and the Association information of service switching in an access fragment of the SG, and sending the SG to the UE.

10. The method of claim 7, wherein:
the access association information is Choice criterion information of service switching; and
the sending the SG to the UE comprises: carrying the first access information in an access fragment of the SG, carrying the Choice criterion information of service switching in at least one of a service fragment, a content fragment, and the access fragment of the SG, and sending the SG to the UE.

11. A user equipment (UE), comprising:
a receiving module, configured to receive a service guide (SG) that comprises first access information, access association information, and second access information;
an obtaining module, configured to receive media corresponding to the first access information, wherein the media corresponding to the first access information supports a service or content; and
a switching module, configured to: when switching is performed, determine second access information according to the access association information, and access media corresponding to the second access information, wherein the media corresponding to the second access information supports the service or content.

12. A service guide (SG) server, comprising:
a first sending module, configured to send an SG to a user equipment (UE), wherein the SG comprises first access information, access association information, and second access information;
a second sending module, configured to send media corresponding to the first access information, wherein the media corresponding to the first access information supports a service or content; and
a third sending module, configured to send media corresponding to the second access information to the UE when the UE performs switching, wherein the media corresponding to the second access information supports the service or content.
